# EUROPEAN PATENT APPLICATION

(11) **EP 2 518 238 A1**
(43) Date of publication of application: **31.10.2012**
(21) Application number: 11164032.2
(22) Date of filing: 28.04.2011
(51) Int. Cl.: E04F 15/10, E04F 15/00, D06N 3/06, D06N 7/00

(54) **Method for manufacturing a plate shaped product and plate shaped product manufactured thereby**

(71) Applicant: IVC NV, 8580 Avelgem (BE)
(72) Inventor: Vermeulen, Stijn, 8700 Aarsele-Tielt (BE)
(74) Representative: De Vries & Metman

(57) **Abstract**

A method is provided for manufacturing a plate shaped product with at least a top protective PVC layer (7) which is applied on an adjacent layer using a coating step and a subsequent gelling step. The method comprises the additional step of providing, in the PVC layer, an initiator and a monomer which during the gelling step cause a cross linking process in the PVC layer, and wherein the initiator is a peroxide.

## Description

The invention firstly relates to a method for manufacturing a plate shaped product with at least a top protective PVC layer which is applied on an adjacent layer using a coating step and a subsequent gelling step.

The term "plate shaped object" may refer to various products, such as floor products, wall products, ceiling products or alike.

The method for manufacturing such a plate shaped product using, at least, a coating step and subsequent gelling step of the protective PVC layer generally uses a PVC plastisol (which may comprise a PVC emulsion, possibly an extender resin, a softener, and stabilising, de-aerating and viscosity reducing agents). In a known situation the use of such a plastisol will lead to a rather soft top protective layer, compared to a situation in which such a top protective PVC layer is produced by calendering and extrusion techniques (in which case a PVC suspension is used with a lower liquid and softener content).

It is an object of the present invention to provide an improved method of the above type.

In accordance with the present invention said method is characterized by the additional step of providing, in the PVC layer, an initiator and a monomer which during the gelling step cause a cross linking process in the PVC layer, and wherein the initiator is a peroxide.

The use of a peroxide as initiator and a monomer results in the creation of an additional cross linking pattern in the top protective PVC layer which improves the properties of said layer (to a level comparable to that of a layer produced by calendering or extrusion techniques). Specifically a very hard top protective PVC layer may be obtained which is extremely wear proof.

In a preferred embodiment of the method according to the present invention a peroxide is provided with such a decomposition temperature that the cross linking process any gelling step substantially occur simultaneously.

During such decomposition the peroxide decomposes into alkoxy radicals and the cross linking process starts. The simultaneous occurrence of the cross linking process and gelling step will lead to a final top protective PVC layer with optimal properties. If the cross linking already would occur (at least partially) before the gelling step, the extent in which the gelling step occurs will be reduced. If, to the contrary, the cross linking (at least partially) will occur after the gelling step, the resulting cross links will be less dense. Thus, in both cases the cross linking process and gelling step will negatively influence each other. When, however, both the cross linking process and gelling step substantially occur simultaneously, both will take place as desired, in an optimal manner.

As such, in an embodiment of the method according to the invention a peroxide is provided with a decomposition temperature in the range from 50°C to 120°C. During a coating process (and gelling step) used when manufacturing a plate shaped product already high temperatures are reached which will cause the required decomposition.

Preferably the peroxide has a decomposition temperature in the range from 80°C to 90°C, which matches processing temperatures between 160°C and 190°C which correspond with the gelling temperature of the used PVC plastisol.

In a preferred embodiment of the method according to the present invention the peroxide is TBPIN (tert-butyl peroxy"-3,5,5"trimetₕylₕexanoate). Such a peroxide provides acceptable properties. It, however, is conceivable to use other peroxides. One example is TBPB (tort-butyl peroxybenzoate) which also will lead to a desired cross linking. However, upon decomposition TBPB will result in two alkoxy radicals of which one is a carboxybenzyl radical which, apart from initiating the monomer, will disappear through two mechanisms: H abstraction while forming benzoic acid and CO2 elimination leading to a benzyl radical followed by H abstraction with the formation of benzene. Regulations all over the world however forbid or limit emissions of benzoic acid and benzene, thus rendering the use of TBPB as peroxide less favourable.

In one embodiment of the method according to the present invention the peroxide is provided in an amount of 0,1 to 1,5 phr, preferably in an amount of 0,4 to 1 phr and most preferably in an amount of 0,6 to 0,8 phr. The abbreviation "phr" stands for parts per hundred parts of resin, The amount of peroxide is important with respect to, among others, the compatibility in relation to added amount, the influence on the rheology of the plastisol (which influence must be minimised) and its influence on the thermic stability of the PVC plastisol. Tests may be performed to determine the optimal amount of peroxide, such as a "pull to break" test which measures the force required to pull the top protective PVC layer apart, a "tear resistance" test which measures the force required to tear the top protective PVC layer or a staining test in which the resistance against permanent staining of the top protective PVC layer is determined. Further tests may be performed to determine the influence on other properties, such as for example the capacity of the top protective PVC layer to be embossed at a following embossing station.

In another embodiment of the method according to the present invention the monomer is a methacrylate ester. Such a methacrylate ester provides the best results, among others on the field of UV stability. It is conceivable, however, to use other monomers, such as acrylate esters.

Preferably, then, the methacrylate ester is a polyfunctional methacrylate ester, and preferably a trifunctional methacrylate ester. The more methacrylate functions will be available, the more dense the final cross linking will be and the stronger the final top protective PVC layer.

In one embodiment of such a method the trifunctional methacrylate ester is TMPTMA (trimethylolpropane trimethacrylate).

Apart from the amount of peroxide, also the amount of monomer will have an influence on the properties of the final top protective PVC layer. Preferably, the monomer is provided in an amount of 5 to 50 phr, more preferably in an amount of 10 to 35 phr and most preferably in an amount of 15 to 25 phr. In a first phase of the cross linking process the monomer (e.g. methacrylate) will function as softening or viscosity reducing agent. Of importance is that the added amount of monomer does not have a negative influence on the rheology of the PVC plastisol. Thus, the optimal amount of the monomer may be based, among others, on rheology studies.

In a second aspect the present invention relates to a plate shaped product with at least a top protective PVC layer and manufactured using the method according to the present invention.

Such a plate shaped product may have the shape of a floor tile or floor plank, but may also be provided in a shape for application on a wall or at a ceiling. Its geometrical shape may vary (although, most preferably, it will be rectangular or square).

One example of such a plate shaped product may comprise, successively, a backing layer, a carrier, a printing layer, a decorative print layer and the top protective PVC layer. These components of the plate shaped product may be manufactured using any combination of different techniques such as, for example, coating, laminating, calendering and extrusion.

Apart from the top protective layer, also other components of the plate shaped product may be manufactured from or be impregnated with a plastic material, e.g. PVC. Finally it is noted, that the plate shaped product also may have a roll shape.

The present invention provides a method which allows to manufacture a plate shaped product (such as for example a modular PVC floor tile) with an extremely wear proof top covering PVC layer using a coating technology, which with respect to its properties is comparable with a plate shaped product of which such top layer is produced by calendering or extrusion techniques. Such a coated top layer may be laminated onto a PVC backing layer, for example, for obtaining such a final product with properties comparable to those of a fully calendered product. The use of a coated top layer allows the manufacture of a decorative print layer and top layer in a single continuous process, whereas during calendering the decorative print layer and top layer are manufactured using two separate processes.

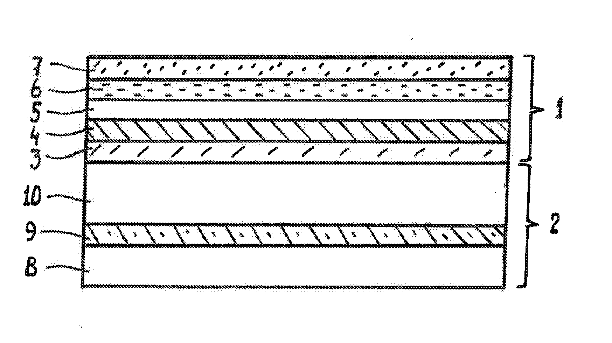

Hereinafter the invention will be elucidated while referring to the drawing which shows a schematic cross section of an embodiment of a plate shaped product embodied as a floor product in accordance with the present invention.

Referring to the drawing, an embodiment of a floor product in accordance with the present invention is illustrated in a schematic cross section (it is noted that this cross section is not necessarily to scale and that the relative dimensions of its constitutive parts may differ from what has been illustrated). This floor product comprises a first upper intermediate product 1 and a lower second intermediate product 2 manufactured separately and thereafter joined together, for example by a lamination process.

In the illustrated embodiment the first upper intermediate product 1 comprises, successively, a PVC plastisol backing layer 3, a non woven glass fiber carrier 4, a PVC plastisol printing layer 5, a decorative print layer 6 and a top protective PVC (plastisol) layer 7. These layers are positioned one on top of the other using a multiple coating process. Each layer has its specific composition, thickness, weight and function in the final floor product. The most important constituents of the plastisols are PVC, fillers, plasticizers, viscosity controllers, stabilisers and foaming means.

The top protective PVC layer 7 is coated and subsequently gelled in accordance with the present invention while providing a peroxide initiator and a monomer, preferably TBPIN (tert-butyl peroxy-3,5,5-trimethylhexanoate) and TMPTMA (trimethylolpropane trimethacrylate), respectively, in preferred amounts of 0,6 to 0,8 phr (parts per hundred parts of resin) and 15 to 25 phr, respectively.

In the illustrated embodiment the second intermediate product 2 comprises a first compact calendered backing layer 8, a carrier 9 (which may be pre-coated, e.g. with a plastisol, for enhancing the adhesion with the calendered layers) and a second compact calendered backing layer 10. Each of the backings 8 and 10 may comprise several separately calendered layers (foils, but also foam layers), if required (for example for achieving a required minimal thickness) laminated together. The carrier 9 may comprise a woven or non woven carrier which may be based on glass fiber material.

The invention is not limited to the embodiments described before which may be varied widely within the scope of the invention as defined by the appending claims.

## Claims

1. Method for manufacturing a plate shaped product with at least a top protective PVC layer which is applied on an adjacent layer using a coating step and a subsequent gelling step, **characterized by** the additional step of providing, in the PVC layer, an initiator and a monomer which during the gelling step cause a cross linking process in the PVC layer, and wherein the initiator is a peroxide.

2. Method according to claim 1, wherein a peroxide is provided with such a decomposition temperature that the cross linking process and gelling step substantially occur simultaneously.

3. Method according to claim 2, wherein a peroxide is provided with a decomposition temperature in the range from 50°C to 120°C.

4. Method according to claim 3, wherein the peroxide has a decomposition temperature in the range from 80°C to 90°C.

5. Method according to any of the previous claims, wherein the peroxide is TBPIN (tert-butyl peroxy-3,5,5-trimethylhexanoate).

6. Method according to any of the previous claims, wherein the peroxide is provided in an amount of 0,1 to 1,5 phr.

7. Method according to claim 6, wherein the peroxide is provided in an amount of 0,4 to 1 phr.

8. Method according to claim 7, wherein the peroxide is provided in an amount of 0,6 to 0,8 phr.

9. Method according to any of the previous claims, wherein the monomer is a methacrylate ester.

10. Method according to claim 9, wherein the methacrylate ester is a polyfunctional methacrylate ester.

11. Method according to claim 10, wherein the polyfunctional methacrylate ester is trifunctional methacrylate ester.

12. Method according to claim 11, wherein the trifunctional methacrylate ester is TMPTMA (trimethylolpropane trimethacrylate) .

13. Method according to any of the previous claims, wherein the monomer is provided in an amount of 5 to 50 phr_{.}

14. Method according to claim 13, wherein the monomer is provided in an amount of 10 to 35 phr.

15. Method according to claim 14, wherein the monomer is provided in an amount of 15 to 25 phr.

16. Plate shaped product with at least a top protective PVC layer manufactured using the method according to any of the previous claims.

17. Plate shaped product according to claim 16 and having the shape of a floor tile or floor plank.
